## Europäisches Patentamt

## European Patent Office

## Office européen des brevets

(19)

(11) **EP 1 473 492 A2**

(12) **EUROPÄISCHE PATENTANMELDUNG**

(43) Veröffentlichungstag:
**03.11.2004 Patentblatt 2004/45**

(51) Int Cl.⁷: **F16H 61/46**

(21) Anmeldenummer: **04009778.4**

(22) Anmeldetag: **24.04.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **02.05.2003  DE 10319628**

(71) Anmelder: **ZF FRIEDRICHSHAFEN
Aktiengesellschaft
88038 Friedrichshafen (DE)**

(72) Erfinder:
- **Haas, Werner
  4400 Enns (AT)**
- **Scharf, Petra
  9462 Bad St. Leonhard (AT)**
- **Kugi, Andreas
  66123 Saarbrücken (DE)**

(54) **Steuerungs- und/oder Regelungsverfahren für die Fahrzeugsteuerung eines Fahrzeuges mit einem stufenlos verstellbarem Getriebe**

(57)    Es wird ein Steuerungs- und/oder Regelungsverfahren für die Fahrzeugsteuerung eines Fahrzeuges mit einem stufenlos verstellbarem Getriebe, insbesondere mit einem Getriebe mit mehreren Kupplungsbereichen, bei dem ein Übersetzungsregler und ein Drückungsregler eingesetzt werden, vorgeschlagen, bei dem für den Übersetzungs- und den Drückungsregler im innersten Regelkreis ein nichtlinearer Regler eingesetzt wird, der ein exakt lineares Eingangs/Ausgangsverhalten zwischen dem Eingang $v_G$ beim Übersetzungs- und $v_D$ beim Drückungsregler und dem Übersetzungsverhältnis iG beim Übersetzungsregler und der Drehzahl des Motors $n_{Mot}$ beim Drückungsregler unabhängig vom Kupplungsbereich erzwingt, wobei in den äußeren Regelkreisen des Übersetzungs- und des Drückungsreglers ein für alle Kupplungsbereiche identischer linearer Regler eingesetzt wird.

EP 1 473 492 A2

**Beschreibung**

Die vorliegende Erfindung betrifft ein Steuerungsund/oder Regelungsverfahren für die Fahrzeugsteuerung eines Fahrzeuges mit einem stufenlos verstellbarem Getriebe, insbesondere mit einem Getriebe mit mehreren Kupplungsbereichen, bei dem ein Übersetzungsregler und ein Drückungsregler eingesetzt werden, gemäß dem Oberbegriff des Patentanspruchs 1.

Nach dem Stand der Technik bestimmt die Fahrzeugsteuerung eines Fahrzeugs mit einem stufenlos verstellbarem Getriebe und Motor-/Getriebemanagement zu jedem Zeitpunkt die optimalen Sollwerte für die Motordrehzahl und die Getriebeübersetzung. Hierbei übernimmt der Drückungsregler die Aufgabe, die Getriebeübersetzung an die jeweilige Last dynamisch anzupassen.

Im stationären Gleichgewicht gilt folgende Gleichung

$$M_{Motor} = i_G * M_{Abtrieb} - M_{Zapfwelle}$$

mit dem Motormoment $M_{Motor}$, dem Lastmoment $M_{Zapfwelle}$ an der Zapfwelle (geschwindigkeitsunabhängiger Nebenabtrieb), dem Abtriebsmoment $M_{Abtrieb}$ und der Getriebeübersetzung $i_G$, wobei die Lastmomente am Abtrieb und der Zapfwelle nicht als Messwerte zur Verfügung stehen, so dass die Funktion der Drückungsregler auf der Regelung der Motordrehzahl basiert.

Hierbei wird ausgehend vom Sollwert $n_{Motsoll}$ für die Motordrehzahl im Leerlauf eine sogenannte Grenzlastdrehzahl $n_{Grenzlast}$ als Funktion des Sollwertes für die Motordrehzahl im Leerlauf $n_{Motsoll}$ definiert. Das Ziel der Drückungsregelung ist es, die Motordrehzahl nicht unter diese Grenzlastdrehzahl $n_{Grenzlast}$ fallen zu lassen, um auf diese Weise die Gefahr des Abwürgens des Motors zu vermeiden. Des weiteren soll mittels der Drückungsregelung vermieden werden, dass die Motordrehzahl die Grenzlastdrehzahl nicht erreicht, da in diesem Fall das volle Motormoment nicht ausgenutzt werden kann. Demnach ist ein Drückungsregler ein Drehzahlregler für den Betrieb des Fahrzeuges bei Volllast. Für die Funktion des Drückungsreglers sind hochdynamische Laständerungen oder Änderungen des Sollwertes der Motordrehzahl von besonderer Bedeutung.

Wenn das Fahrzeug im Teillastbetrieb fährt, dann ist der Drückungsregler außer Funktion und die Veränderung der Getriebeübersetzung erfolgt in Abhängigkeit des Fahrwunsches (z.B. Fahrpedalstellung). Hierbei wird die Übersetzungsveränderung von einem sogenannten Übersetzungsregler in der Fahrzeugsteuerung durchgeführt.

Aus dem Stand der Technik, insbesondere aus der EP 0 967 107 B1 ist ein Drückungsregler als Teil des Fahrzeugreglers bekannt. Hierbei wird die Getriebesollverstellung derart begrenzt, dass die Motordrehzahl nicht unter einen Wert fällt, der eine Funktion der Stellung des Leistungsstellorganes des Motors ist, wobei die Grenzen rein motorbezogen sind. Dadurch werden Belastungsänderungen des Motors vermieden, die zu einem Hochdrehen oder Abwürgen des Motors führen können.

Hierbei wird die Drückungsregelung wirksam, wenn die eingestellte Getriebeübersetzung und/oder Verstellgeschwindigkeit zu hoch ist, um mit der momentan verfügbaren Motorleistung die anliegenden Fahrwiderstände zu überwinden. Bevorzugterweise wird im Rahmen der EP 0 967 107 B1 die Regelabweichung als die Differenz zwischen der momentanen Motordrehzahl und der Motordrehzahl an einem vorgegebenen optimalen Punkt definiert; primäres Regelziel ist es, eine Unterschreitung der optimalem Motordrehzahl zu verhindern. Aus der Regelabweichung wird anhand einer vorgegebenen Funktion ein Soll-Motordrehzahlgradient ermittelt, mittels dessen die Motordrehzahl zum optimalen Punkt hingeführt werden kann. Zudem wird eine Regelabweichung aus dem Soll-Motordrehzahlgradienten und dem gemessenen Motordrehzahlgradienten gebildet und daraus eine differentielle Ableitung der Getriebeverstellung berechnet und begrenzt.

Jedoch weist die aus der EP 0 967 107 B1 bekannte Konzeption den Nachteil auf, dass bei schwerem Zugbetrieb Drehzahlschwankungen auftreten können, welche durch eine ungenügende Auslegung der Reglerstruktur des Drückungsreglers verursacht werden.

Zudem kann es vorkommen, dass die Motordrehzahl nicht immer die Grenzlastdrehzahl erreicht, was durch die Umschaltstrategie von Übersetzungsregler auf den Drückungsregler verursacht wird. Diese Umschaltstrategie kann auch ein Unterschwingen (Motordrehzahl < Grenzlastdrehzahl) bei Lastsprüngen zur Folge haben.

Der vorliegenden Erfindung liegt die Aufgabe zugrunde, ein Steuerungs- und/oder Regelungsverfahren für die Fahrzeugsteuerung eines Fahrzeuges mit einem stufenlos verstellbarem Getriebe, insbesondere mit einem Getriebe mit mehreren Kupplungsbereichen, bei dem ein Übersetzungsregler und ein Drückungsregler eingesetzt werden, anzugeben, mittels dessen die Nachteile des Standes der Technik vermieden werden. Das erfindungsgemäße Verfahren soll insbesondere bei mobilen Arbeitsgeräten zur Anwendung kommen.

Das Verfahren soll auch bei Getrieben mit mehreren Kupplungsbereichen, bei denen die zu regelnde Strecke ein nichtlineares System ist, dessen Parameter zwar bekannt sind, sich aber von Kupplungsbereich zu Kupplungsbereich unterscheiden, optimale Ergebnisse liefern.

Diese Aufgabe wird durch die Merkmale des Patentanspruchs 1 gelöst. Weitere Ausgestaltungen und Vorteile gehen aus den Unteransprüchen hervor.

Demnach wird ein Steuerungs- und/oder Regelungsverfahren vorgeschlagen, bei dem sowohl für den Übersetzungs- als auch für den Drückungsregler im innersten Regelkreis ein nichtlinearer Regler eingesetzt wird, der ein exakt lineares Eingangs/Ausgangsverhalten zwischen den Eingängen $v_G$ beim Übersetzungs- und $v_D$ beim Drückungsregler und dem Übersetzungsverhältnis $i_G$ beim Übersetzungsregler bzw. der Drehzahl des Motors $n_{Mot}$ beim Drückungsregler unabhängig vom Kupplungsbereich erzwingt.

Somit wird durch die nichtlinearen Regler, deren Parameter sich in den jeweiligen Kupplungsbereichen entsprechend der Modelle unterscheiden, im geschlossenen Kreis ein exakt lineares Verhalten erzeugt, welches unabhängig von den eingelegten Kupplungen ist. Damit kann in vorteilhafter Weise in den äußeren Regelkreisen ein für alle Kupplungsbereiche identischer linearer Regler eingesetzt werden.

Erfindungsgemäß wird eine Entscheiderlogik angegeben, welche ein möglichst ruckfreies Umschalten zwischen dem Übersetzungs- und dem Drückungsregler gewährleistet. Die Entscheiderlogik ist gemäß der Erfindung so aufgebaut, dass die Schwenkwinkel des Übersetzungs- und des Drückungsreglers $\alpha_G$ bzw. $\alpha_D$ miteinander verglichen werden und je nach Kupplungsbereich der jeweils kleinere bzw. größere Wert auf das System aufgeschaltet wird.

Durch die erfindungsgemäße Konzeption werden die Drehzahlschwankungen im Volllastbetrieb erheblich reduziert. Im Vergleich zum Stand der Technik können die Drehzahlschwankungen um den Faktor 3 reduziert werden. Des weiteren wird durch den Einsatz des erfindungsgemäßen Verfahrens die Genauigkeit der Drehzahlregelung signifikant erhöht. Ein weiterer Vorteil besteht darin, dass sich das Unterschwingen um den Faktor 3 verringert.

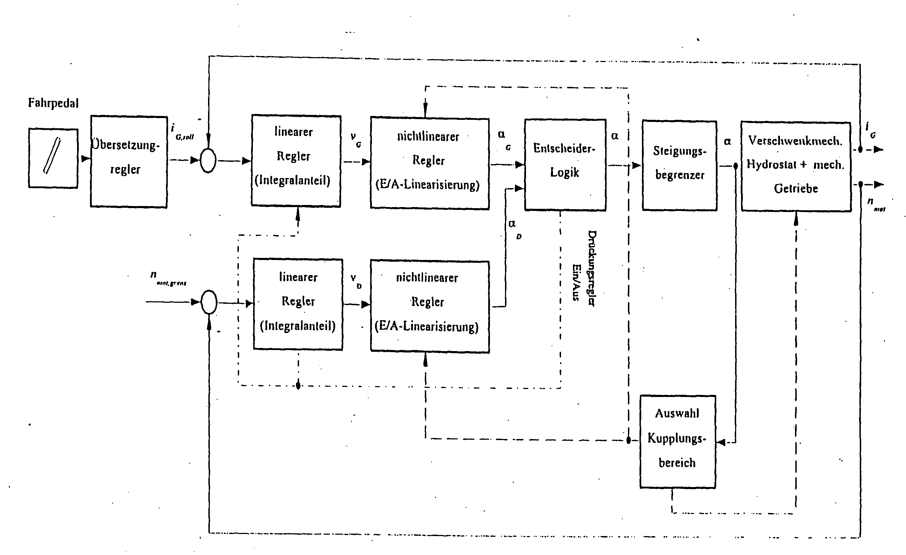

Die Erfindung wird im folgenden anhand der beigefügten Figur, welche die prinzipielle Funktionsweise des erfindungsgemäßen Regelungskonzeptes in Form eines Blockschaltbildes zeigt, beispielhaft näher erläutert.

Wie der Figur zu entnehmen ist, wird erfindungsgemäß beim Übersetzungsregler und beim Drückungsregler ein nichtlinearer Regler eingesetzt, der ein exakt lineares Eingangs/Ausgangsverhalten zwischen dem Eingang $v_G$ beim Übersetzungs- und $v_D$ beim Drückungsregler und dem Übersetzungsverhältnis iG beim Übersetzungsregler und der Drehzahl des Motors $n_{Mot}$ beim Drückungsregler unabhängig vom Kupplungsbereich erzwingt.

Aufgrund des von den nichtlinearen Reglern generierten linearen Verhaltens wird in vorteilhafter Weise in den äußeren Regelkreisen des Übersetzungs- bzw. des Drückungsreglers ein für alle Kupplungsbereiche identischer linearer Regler eingesetzt.

Die Integralanteile der linearen Regler werden erfindungsgemäß beim jeweils nicht aktiven Regler und in den Zwischenkupplungsbereichen (in den Zwischenkupplungsbereichen sind zwei Kupplungen aktiv) im Sinne einer Regler-Antiwindup-Vermeidung deaktiviert.

Das Umschalten zwischen dem Übersetzungs- und dem Drückungsregler erfolgt über eine Entscheiderlogik, welche derart aufgebaut ist, dass die Schwenkwinkel des Übersetzungs- und des Drückungsreglers $\alpha_G$ bzw. $\alpha_D$ miteinander verglichen werden und in Abhängigkeit vom Kupplungsbereich der jeweils kleinere bzw. größere Wert verwendet wird.

Das von der Entscheiderlogik generierte Schwenkwinkelsollsignal $\alpha$ wird erfindungsgemäß durch einen Steigungsbegrenzer auf die im System gegebene maximale Steigung beschränkt; anschließend wird das beschränkte Signal auf die Steuerung des Schwenkscheibenmechanismus der Hydrostatpumpe aufgeschaltet.

Der Wert des Schwenkwinkelsollsignals $\alpha$ nach dem Steigungsbegrenzer kann erfindungsgemäß auch als Grundlage zur Auswahl der Kupplungsbereiche dienen.

<u>Bezugszeichen</u>

| | |
|---|---|
| $n_{Motsoll}$ | Sollwert für die Motordrehzahl im Leerlauf |
| $n_{Mot}$ | Motordrehzahl |
| $M_{Motor}$ | Motormoment |
| $M_{zapfwelle}$ | Lastmoment an der Zapfwelle |
| $M_{Abtrieb}$ | Abtriebsmoment |
| $i_G$ | Getriebeübersetzung |
| $n_{Grenzlast}$ | Grenzlastdrehzahl |
| $V_G$ | Eingang des nichtlinearen Reglers des Übersetzungsreglers |
| $V_D$ | Eingang des nichtlinearen Reglers des Drückungsreglers |
| $\alpha_G$ | Schwenkwinkel des Übersetzungsreglers |
| $\alpha_D$ | Schwenkwinkel des Drückungsreglers |
| $i_{Gsoll}$ | Sollgetriebeübersetzung |

**Patentansprüche**

1. Steuerungs- und/oder Regelungsverfahren für die Fahrzeugsteuerung eines Fahrzeuges mit einem stufenlos verstellbarem Getriebe, insbesondere mit einem Getriebe mit mehreren Kupplungsbereichen, bei dem ein Übersetzungsregler und ein Drückungsregler eingesetzt werden, **dadurch gekennzeichnet, dass** für den Übersetzungs- und den Drückungsregler im innersten Regelkreis ein nichtlinearer Regler eingesetzt wird, der ein exakt lineares Eingangs/Ausgangsverhalten zwischen dem Eingang $v_G$ beim Übersetzungs- und $v_D$ beim Drückungsregler und dem Übersetzungsverhältnis iG beim Übersetzungsregler und der Drehzahl des Motors $n_{Mot}$ beim Drückungsregler unabhängig vom Kupplungsbereich erzwingt und dass in den äußeren Regelkreisen des Übersetzungs- und des Drückungsreglers ein für alle Kupplungsbereiche identischer linearer Regler eingesetzt wird.

2. Verfahren nach Anspruch 1, **dadurch gekennzeichnet, dass** das Umschalten zwischen dem Übersetzungs- und dem Drückungsregler über eine Entscheiderlogik erfolgt, welche derart aufgebaut ist, dass die Schwenkwinkel des Übersetzungs- und des Drückungsreglers $\alpha_G$ bzw. $\alpha_D$ miteinander verglichen werden und je nach Kupplungsbereich der jeweils kleinere bzw. größere Wert auf das System aufgeschaltet wird.

3. Verfahren nach Anspruch 1 oder 2, **dadurch gekennzeichnet, dass** die Integralanteile der linearen Regler des Übersetzungs- und des Drückungsreglers beim jeweils nicht aktiven Regler und in den Zwischenkupplungsbereichen, bei denen zwei Kupplungen aktiv sind, deaktiviert werden.

4. Verfahren nach Anspruch 2 oder 3, **dadurch gekennzeichnet, dass** das von der Entscheiderlogik generierte Schwenkwinkelsollsignal $\alpha$ von einem Steigungsbegrenzer auf die im System gegebene maximale Steigung beschränkt und anschließend auf die Steuerung des Schwenkscheibenmechanismus aufgeschaltet wird.

5. Verfahren nach Anspruch 4, **dadurch gekennzeichnet, dass** der Wert des Schwenkwinkelsollsignals nach dem Steigungsbegrenzer als Grundlage zur Auswahl der Kupplungsbereiche des Getriebes verwendet wird.

Fahrpedal

Übersetzung-regler

$i_{G,soll}$

linearer Regler (Integralanteil)

$v_G$

nichtlinearer Regler (E/A-Linearisierung)

$\alpha_G$

Entscheider-Logik

$\alpha$

Steigungs-begrenzer

$\alpha$

Verschwenkmech. Hydrostat + mech. Getriebe

$i_G$

$n_{mot}$

$n_{mot,grenz}$

linearer Regler (Integralanteil)

$v_D$

nichtlinearer Regler (E/A-Linearisierung)

$\alpha_D$

Druckungsregler Ein/Aus

Auswahl Kupplungs-bereich

EP 1 473 492 A2

5